# EUROPEAN PATENT APPLICATION

(11) **EP 4 831 057 A1**
(43) Date of publication of application: **28.10.2026**
(21) Application number: 26171441.4
(22) Date of filing: 09.04.2026
(51) Int. Cl.: B64C 3/56, B64C 1/40, B64C 3/54, B64C 23/06, B64D 45/00

(54) **A FOLDING WING ARRANGEMENT COMPRISING A POSITION SENSING ARRANGEMENT**

(30) Priority: 25.04.2025 GB 202506214
(71) Applicant: Airbus Operations Ltd, Filton, Bristol BS34 7PA (GB)
(72) Inventor: MORRELL, Paul, Bristol, BS34 7PA (GB); CLOUGH, James, Bristol, BS34 7PA (GB); RUIZ DE PABLO, Javier, Bristol, BS34 7PA (GB); PALMER, Scott, Bristol, BS34 7PA (GB)
(74) Representative: Abel & Imray LLP

(57) **Abstract**

An aircraft wing, comprising a fixed wing 12 and an outboard wing section 14. The aircraft wing is configurable between: a flight configuration for use during flight and a ground configuration for use during ground-based operations, in which ground configuration the outboard wing section is moved away from the flight configuration, such that the span of the aircraft wing is reduced. The aircraft wing further comprises a position sensing assembly 40 for generating an output useable to determine the position of the outboard wing section 14 relative to the fixed wing 12. The position sensing assembly 40 is associated with the wiring harness 15. The assembly 40 may comprise a sensor such as a potentiometer 42. The assembly may comprise a deformation sensor 142.

## Description

### BACKGROUND OF THE INVENTION

The present disclosure relates to folding wing arrangements. More particularly, but not exclusively, this invention concerns an aircraft wing comprising a fixed wing and a moveable outboard wing section and a position sensing arrangement.

It is increasingly desirable to have larger wing spans across all sizes of passenger aircraft as a means to improve fuel efficiency. Particularly for larger aircraft, however, the maximum aircraft span is effectively limited by airport operating rules which govern various clearances required when manoeuvring around the airport (such as the span and/or ground clearance required for gate entry and safe taxiway usage).

Therefore, folding wing tip devices have been introduced into passenger aircraft, where a wing tip device is movable between a flight configuration for use during flight, and a ground configuration for use during ground-based operations. In the ground configuration, the wing tip device is moved away from the flight configuration such that the span of the aircraft wing is reduced, thereby allowing use of existing gates and safe taxiway usage. In such arrangements the moveable end of the wing may sometimes be referred to as a 'folding wing tip' or 'folding wing tip device'. However, it will be appreciated that such a term may also encompass a range of sizes, and where the hinge is relatively far inboard this may equally be considered an 'outboard wing section', a 'folding wing' or a 'movable wing'. For the purposes of the present disclosure these terms are used interchangeably.

It is desirable to accurately establish the exact position of the outboard wing section of a folding wing arrangement. For example, this tends to be especially important in the context of latching and locking the wing in a flight or a ground configuration, where precise alignment of latching/locking pins and their associated bores may be required. In principle, it may be possible to incorporate a position sensor into the actuator that moves the outboard wing section relative to the fixed wing. However, it may also be desirable to incorporate a degree of backlash or freeplay into such an actuator, to ensure that the actuator is not subjected to flight loads. Achieving a suitable position sensing arrangement, whilst also achieving this objective for the actuator may be challenging. This is because the backlash/freeplay in the actuator tends to introduce an associated degree of uncertainty when determining the position of the outboard wing section.

Aspects of the present disclosure seek to mitigate one or more of the above-mentioned challenges. Alternatively or additionally, aspects of the present disclosure seek to provide an improved aircraft wing.

### SUMMARY OF THE INVENTION

According to a first aspect of the disclosure, there is provided an aircraft wing, comprising: a fixed wing; and an outboard wing section outboard of the fixed wing, the outboard wing section being moveably mounted at a joint at the end of the fixed wing, wherein the aircraft wing is configurable between: (i) a flight configuration for use during flight and (ii) a ground configuration for use during ground-based operations, in which ground configuration the outboard wing section is moved away from the flight configuration, such that the span of the aircraft wing is reduced. Wherein the aircraft wing further comprises a position sensing assembly for generating an output useable to determine the position of the outboard wing section relative to the fixed wing. A wiring harness extends between the fixed wing and the outboard wing section, the wiring harness may comprise a plurality of conductors and being arranged to transmit electrical power and/or data to the outboard wing section. The position sensing assembly is associated with the wiring harness.

Associating the position sensing assembly with the wiring harness has been found to be especially beneficial. It has been recognised that the wiring harness tends to move in a predictable manner that can be accurately correlated with the position of the outboard wing section.

The position sensing assembly may be associated with the wiring harness in a number of different ways.

In some embodiments, the wing may further comprise a harness guide to guide the wiring harness between the fixed wing and the outboard wing section. During movement of the wing from the flight to the ground configuration, the wiring harness may be at least partially unwound from the harness guide. The harness guide may comprise a helical channel in which the wiring harness is received. During movement of the wing from the flight to the ground configuration, the wiring harness may be partially unwound from the helical channel. It will be appreciated that the reverse movement may also be present. As such, during movement of the wing from the ground to the flight configuration, the wiring harness may be at least partially wound onto the harness guide (for example onto the helical channel).

The position sensing assembly may comprise a sensor arranged to generate the output in dependence on the relative rotation between the harness guide and a location on the wiring harness. The location on the wiring harness may be an attachment point arranged to hold the wiring harness in position, at the attachment point, relative to the outboard wing section.

Embodiments comprising a harness guide and a sensor have been found to be especially beneficial, especially those comprising a sensor arranged to generate the output in dependence on the relative movement, for example the relative rotation, between the harness guide and a location on the wiring harness. It has been recognised that the wiring harness tends to move in a predictable manner relative to the harness guide, and that this can be accurately correlated with the position of the outboard wing section. In some embodiments the sensor may be a linear variable transducer. In other embodiments, the movement may be a relative rotational movement and is therefore suitable for sensing using a rotary variable transducer such as a potentiometer.

The sensor may be coupled to the location on the wiring harness via a mechanical link. The mechanical link may move in response to movement of the location on the wiring harness. The sensor may be a rotary transducer. The sensor may be a potentiometer comprising a rotatable electrical contact. The transducer, for example the potentiometer, may be fixed relative to the harness guide and a rotatable member, for example the rotatable contact, may be arranged to rotate in dependence on the movement of the location on the wiring harness. For example, a mechanical link may extend between the rotatable member and the location on the wiring harness.

In other embodiments, the position sensing assembly may comprise a deformation sensor. The deformation sensor may be configured to generate the output in dependence on the deformation of the wiring harness during movement of the wing between the flight and the ground configuration. Embodiments comprising a deformation sensor have been found to be beneficial because they recognise that the wiring harness tends to deform in a predictable manner, and that this can be accurately correlated with the position of the outboard wing section.

The deformation sensor may, for example, be a transducer. The transducer may be a piezo transducer, such as a piezo electric spine. The deformation sensor may be a linear variable resistor. The deformation sensor may be a fibre optic spine (for example comprising a Fibre Bragg Grating (FBG)). Arrangements comprising such sensor(s) have been found to be especially suitable for integration into the wiring harness.

The wing may comprise a plurality of deformation sensors. The plurality of deformation sensors may be distributed around the wiring harness.

The wiring harness may comprise a plurality of electrical and/or data conductors. Each of the plurality of conductors in the wiring harness may be a sheathed conductor. Each of the conductors may take a number of forms depending on its use. The conductor may be a wire, but is more preferably a cable. For example, the conductor may be a single core cable, or a multi-core cable.

The wiring harness may be encased in a protective outer sleeve. The protective sleeve may be formed from a single piece of material. For example, the protective sleeve may be moulded around the circumference of the wiring harness. The sleeve may substantially enclose the wiring harness. It will be appreciated that the term 'sleeve' does not imply that the wiring harness has necessarily been fed through the sleeve. Indeed, the term 'sleeve' encompasses an arrangement in which the sleeve material has been moulded around the wiring harness *in situ,* to encase it.

In embodiments comprising one or more deformation sensors, the deformation sensor(s) may be integrated into the protective sleeve. Such an arrangement has been found to be beneficial because the deformation sensor(s) may be readily integrated along the length of the sleeve (for example embedded into the sleeve material).

The position sensing assembly is for generating an output useable to determine the position of the outboard wing section relative to the fixed wing. In other words, the position sensing assembly itself does not necessarily determine the position of the outboard wing section. In such embodiments, a processor module may be configured to determine the position of the outboard wing section, in dependence on the output of the position sensing assembly. The processor module may be in the aircraft wing. The processor module may be remote from the aircraft wing, for example within the avionics system of the aircraft.

Aspects of the invention may be applicable on various folding wing tip designs. The joint may comprise a hinge assembly. The hinge assembly may comprise: a fore set of interleaving lugs and an aft set of interleaving lugs; and a fore hinge pin and an aft hinge pin, extending through the fore and aft sets of interleaving lugs respectively, thereby forming a hinge. The wing may further comprise an actuator assembly configured to rotate the outboard wing section to move the wing between the flight configuration and the ground configuration. The actuator may, for example, comprise a Geared rotary Actuator (GRA). The GRA may be located between the fore and aft sets of interleaving lugs.

According to another aspect of the invention, there is provided an aircraft wing, comprising: a fixed wing; and an outboard wing section outboard of the fixed wing, the outboard wing section being rotatable, relative to the fixed wing, about a hinge axis, wherein the aircraft wing is configurable between: (i) a flight configuration for use during flight and (ii) a ground configuration for use during ground-based operations, in which ground configuration the outboard wing section is rotated about the hinge axis away from the flight configuration, such that the span of the aircraft wing is reduced. The aircraft wing further comprises a position sensing assembly for generating an output signal from which the position of the outboard wing section relative to the fixed wing may be determined, wherein the position sensing assembly is associated with a wiring harness extending between the fixed wing and the outboard wing section, and wherein the position sensing assembly is configured to generate the output signal based on: (a) the relative movement between a location on the wiring harness and a location on the fixed wing, during movement of the wing between the flight and the ground configuration, or (b) the deformation of the wiring harness during movement of the wing between the flight and the ground configuration.

In any of the aspects of the invention, it may be that the outboard section of the wing is configured to be extended out to a position in which the wing is in the flight configuration, and is configured to be retracted to a position in which the wing is in the ground configuration and the total length of the wing is reduced. In the flight configuration the trailing edge of the outboard wing section may be a continuation of the trailing edge of the fixed wing. The leading edge of the outboard wing section may be a continuation of the leading edge of the fixed wing, such that there is a smooth transition from the fixed wing to the outboard wing section. It will be appreciated that there may be a smooth transition, even where there are changes in sweep or twist at the fixed wing/ outboard wing section. However, there are preferably no discontinuities at the junction between the fixed wing and outboard wing section.

The outboard wing section may be a wing tip extension, for example a generally planar tip extension. In other embodiments, the outboard wing section may comprise, or consist of, a non-planar device, such as a winglet. The outboard wing section may include, for example, trailing edge moveable devices for control (ailerons) or leading edge devices for stall protection, such as slats or droop nose devices.

When the wing is in the ground configuration (e.g. with the outboard wing section retracted), the aircraft incorporating the wing, may be unsuitable for flight. For example, the outboard wing section may be aerodynamically and/or structurally unsuitable for flight in the ground configuration.

With the push for higher and higher aspect ratio wings, the embodiments of the invention are well suited to use in such wings (i.e. long narrow wings), which typically have confined space in which to mount equipment. The aspect ratio of a wing is defined as the ratio of its span to its mean chord and equal to the square of the span divided by the wing area. The aspect ratio of the wing may be greater than 8, possibly greater than 9, and optionally 10 or higher. In some embodiments it may be that the aspect ratio of the wing is 11 or 12 or more.

The maximum depth of the wing (height between upper and lower wing covers) at the hinge axis may be less than 50cm, and in some embodiments may be less than 35cm. The depth of the wing at the hinge axis may be less than 32.5cm, preferably less than 27.5cm, and optionally less than 22.5cm.

The length of the outboard wing section of the aircraft wing may be more than 3m, preferably more than 4m, and more preferably more than 5m.

The span ratio of the fixed wing relative to the outboard wing section may be such that the fixed wing comprises at least 60%, 70%, 80%, 90%, or more, of the overall span of the wing. The span ratio of the fixed wing relative to the outboard wing section may be such that the outboard wing section comprises at least 10%, 20%, 30%, 40%, or more, of the overall span of the wing.

According to another aspect of the invention, there is provided a wiring harness and position sensing assembly for use as the wiring harness and position sensing assembly according to any aspect herein.

According to yet another aspect of the invention, there is provided an aircraft comprising the aircraft wing of any of the aspects herein. The aircraft may be a passenger aircraft. The passenger aircraft preferably comprises a passenger cabin comprising a plurality of rows and columns of seat units for accommodating a multiplicity of passengers. The aircraft may have a capacity of at least 20, more preferably at least 50 passengers, and optionally more than 75 passengers. The aircraft may be a commercial aircraft, for example a commercial passenger aircraft, for example a single aisle or twin aisle aircraft. The aircraft need not be configured for carrying passengers, but could for example be an aircraft of an equivalent size configured for cargo and/or used on a non-commercial basis. The aircraft may have a maximum take-off weight (MTOW) of at least 20 tonnes, optionally at least 40 tonnes, and possibly 50 tonnes or 100 tonnes or more. The aircraft may have an operating empty weight of at least 20 tonnes, optionally at least 30 tonnes, and possibly about 40 tonnes or more.

In the flight configuration, the span of the aircraft may exceed an airport compatibility limit. In the ground configuration the span may be reduced such that the span (with the wing in the ground configuration) is less than, or substantially equal to, the airport compatibility limit. The airport compatibility limit is a span limit (for example relating to clearance restrictions for buildings, signs, other aircraft). The compatibility limit is preferably a gate limit.

It may be that the span of the aircraft in the ground configuration is less than a wing span limit and that the span of the aircraft wing in the flight configuration is greater than the wing span limit. The wing span limit may be 36m. The wing span limit may be 52m. The wing span limit may be 65m. The wing span limit may be 80m. It may be that the span of the aircraft wing is at least 8 metres shorter (possibly 10 metres or more shorter) in the ground configuration than in the flight configuration.

It may be that the outboard wing section undergoes a rotation of more than 45 degrees, preferably more than 60 degrees, and optionally more than 75 degrees as it moves from the ground configuration to the flight configuration. A higher amount of rotation may enable a greater difference in wing span as between the ground configuration and the flight configuration.

The mean chord of the wing may be less than 6.5m, less than 5m, and more preferably less than 4.5m. The chord of the wing at the interface between the fixed wing and the outboard wing section may be less than 5m. For example, for an aircraft having a wing span in the ground configuration of between 65m and 80m, the chord of the wing at the interface between the fixed wing and the outboard wing section may be greater than 3m but less than 5m. For an aircraft having a wing span in the ground configuration of 65m or less, the chord of the wing at the interface between the fixed wing and the outboard wing section may be less than 4m, and may optionally be less than 3m.

According to yet another aspect of the invention, there is provided a method of determining the position of an outboard wing section, relative to a fixed wing section, the method comprising the step of: measuring a change in the position and/or shape of a wiring harness, the wiring harness extending from the fixed wing to the outboard wing section. The method may further comprise the step of calculating the position of the outboard wing section in dependence on said measurement.

It will of course be appreciated that features described in relation to one aspect of the present disclosure may be incorporated into any and all other aspects of the present disclosure. Furthermore, the method of the disclosure may incorporate any of the features described with reference to the apparatus of the disclosure and *vice versa.* Furthermore, features described with reference to one apparatus aspect, may be equally applicable to another apparatus aspect and *vice versa.*

### DESCRIPTION OF THE DRAWINGS

Embodiments of the present invention will now be described by way of example only with reference to the accompanying schematic drawings of which:
Figure 1 shows an aircraft wing comprising a fixed wing and an outboard wing section according to an embodiment of the invention;
Figure 2 shows an aircraft comprising an aircraft wing as shown in Figure 1;
Figures 3A and 3B show a length of wiring harness encased within a protective sleeve, extending between the fixed wing and outboard wing section in the aircraft wing of Figure 1;
Figures 4A and 4B are schematic line-of-flight views of the wiring harness of Figures 3A and 3B together with a position sensing assembly for generating an output useable to determine the position of the outboard wing section relative to the fixed wing;
Figures 5A and 5B show a length of wiring harness encased within a protective sleeve, extending between the fixed wing and outboard wing section in an aircraft wing according to a second embodiment of the invention; and
Figure 6 is a flow chart showing a method associated with an embodiment of the invention.

### DETAILED DESCRIPTION

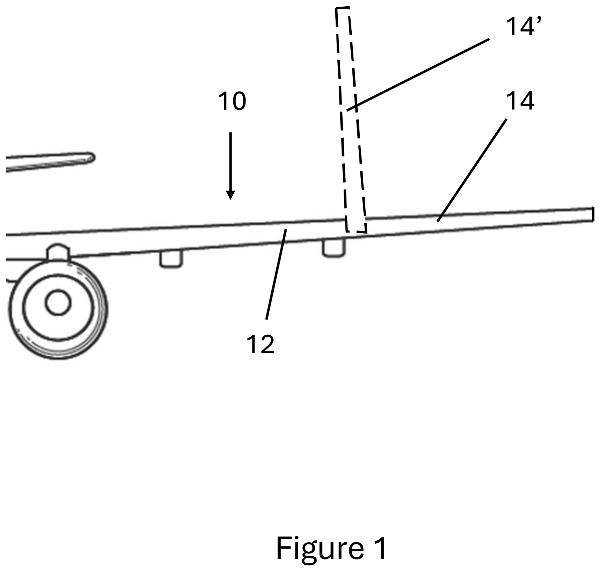

Figure 1 is a schematic image, showing an aircraft wing 10 comprising a fixed wing 12 and an outboard wing section 14, which forms a folding wing tip section. Figure 1 is a composite image and shows the aircraft wing 10 both in a ground configuration (shown in broken line) and in a flight configuration (shown in solid line). It will be seen in the ground configuration the outboard wing section 14' is folded up to be vertical (or near vertical) so that the span of the aircraft wing 10 is reduced compared to the flight configuration. A longer wing may provide the aircraft with an increased lift, better fuel efficiency, reduce the drag, and provide more stability in flight. However, there are size limitations imposed on current airport gates (gate limits), which restrict the wingspan of an aircraft to a certain length. Gate limits may be categorised by reference to an Aerodrome Reference Code letter according to the classification given by ICAO (the International Civil Aviation Organization). Example gate limits are code C (total wing span must be less than 36m), code D (total wing span must be less than 52m), code E (total wing span must be less than 65m), and code F (total wing span must be less than 80m). To overcome this, folding wings may be used, to improve the aspect ratio of the wings during flight, whilst not surpassing the gate limits. In this embodiment, the aircraft has a wing span of about 45m in the flight configuration but with a wing span of just under 36m in the ground configuration (making the aircraft suitable for use in airports having code C compatible gates (which set a limit on maximum wing span of 36m). The outboard wing section 14 is about 5m long to achieve this benefit. The chord of the wing at the interface between the fixed wing 12 and the outboard wing section 14 is about 1.9m and the mean aerodynamic chord (MAC) of the wing is about 4.2m. The maximum depth of the wing 10 (height between upper and lower wing covers) at the junction between the outboard wing section 14 and the fixed wing is about 20cm. The aspect ratio of the wing 10 is about 14.

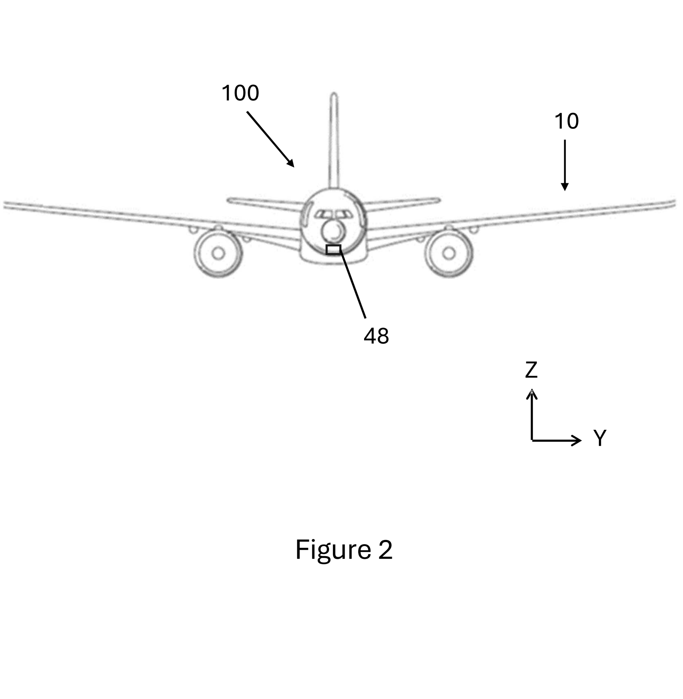

Figure 2 shows the aircraft wing 10 of Figure 1 as part of an aircraft 100. In Figure 2 the aircraft wing 10 is in a flight configuration, where the outboard wing section 14 has been extended from the ground configuration shown in Figure 1 (i.e. rotated to a position in which the outboard wing section 14 forms a continuation of the aerodynamic exterior surface profile of the fixed wing 12). Thus, as shown in Figure 2, the aircraft wing 10 in the flight configuration forms one continuous shape, the outboard wing section 14 extending the general shape of the fixed wing 12.

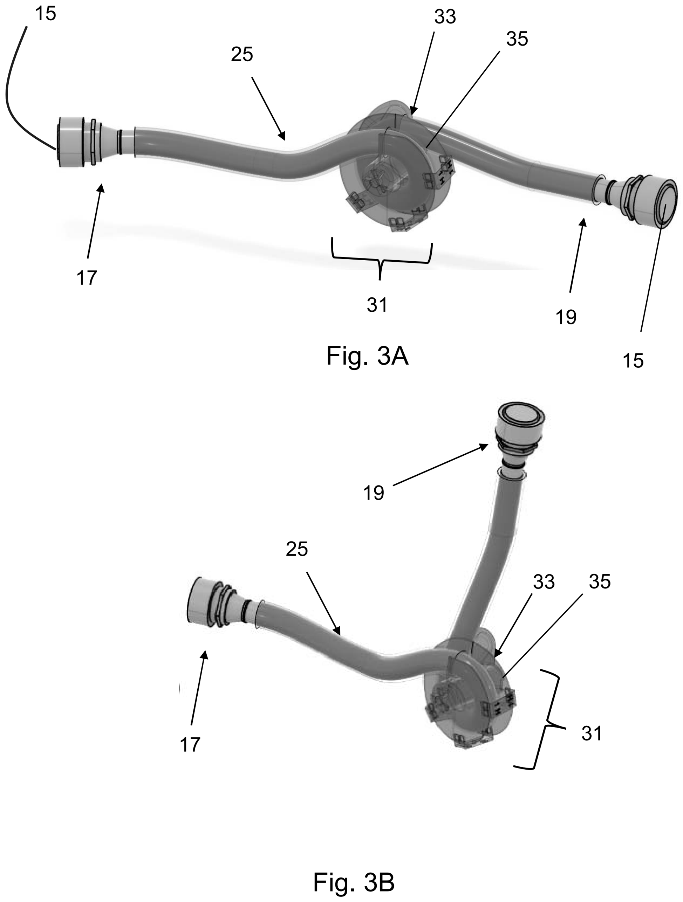

Aircraft having wings with a fixed portion and a foldable outer section are known *per se.* However, the first embodiment of the invention comprises a novel arrangement for determining the position of the outboard wing section as will now be described in more detail with reference to Figures 3A to 4B.

Figures 3A and 3B illustrate a protective sleeve 25 which encases a wiring harness 15. The wiring harness 15 is only visible schematically, in cross section, at the end of the sleeve 25 in Figures 3A and 3B, but in practice the wiring harness 15 extends beyond the sleeve 25 from within the inside of the fixed wing 12 and out into the outboard wing section 14. For clarity, none of the structure of the fixed wing or outboard wing section is shown in Figures 3A to 4B.

The wiring harness 15 emerges from the fixed wing 12 at a first end 17, and then crosses a hinged joint in the aircraft wing (not shown). The harness 15 enters the outboard wing section 14 at a second end 19, and then continues into the outboard wing section where it connects to a variety of devices and sensors. The sleeve 25 is bounded at the first and second ends 17, 19 by couplings. The couplings are configured to connect the wiring harness 15 to the adjacent lengths of the wiring harness (not shown) in the fixed wing 12 and the outboard wing section 14.

The wiring harness 15, as is known in wiring harnesses *per se* in the art, contains a multiplicity of sheathed electrical cables (not shown individually in the Figures). Each of the electrical cables performs a different function (for example, to supply electrical power to different devices in the aircraft, or to transmit data signals to/from sensors and devices in the aircraft). The cables are collected together in an assembly to form the harness, that is then routed in a suitable manner through the aircraft wing.

The protective sleeve 25 encases the wiring harness 15. The sleeve 25 follows a path as it extends along its length from the fixed wing 12 to the outboard wing section 14. In the first embodiment, the path includes a helical curve within the part labelled 31 in Figures 3A and 3B.

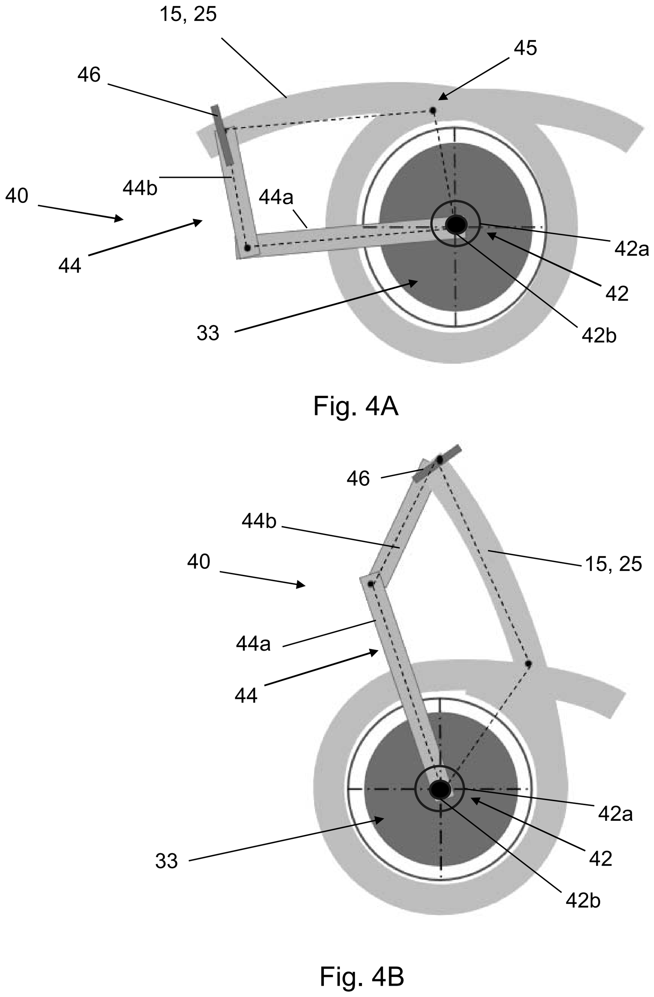

Figures 3A and 3B show the wiring harness 15 and the sleeve 25, when the wing is in the flight and the ground configuration respectively. These images also show a harness guide 33. The harness guide 33 is fixedly mounted on the fixed wing 12. The harness guide 33, comprises a helical channel 35 in which the corresponding helical curved length 31 of the protective sleeve 25 is received. In use, the protective sleeve 25 (encasing the wiring harness 15) is fed into the helical channel 35 such that the sleeve 25 wraps around the harness guide 33. When the outboard wing section 14 moves relative to the fixed wing 12, the sleeve 25 wraps more or less around the harness guide 33 (i.e. is wound/unwound about the guide). This can be seen when comparing the position of the sleeve in Figures 3A and 3B. This is also clearly shown in the schematic images of Figures 4A and 4B to which reference will now be made.

Figures 4A and 4B are schematic line-of-flight views of the wiring harness of Figures 3A and 3B (albeit from the opposite fore-aft direction). Figures 4A and 4B also show a position sensing assembly 40 for generating an output useable to determine the position of the outboard wing section 14 relative to the fixed wing 12.

The position sensing assembly 40 comprises a sensor, in the form of a potentiometer, 42, located centrally on the harness guide 33. The potentiometer 42 comprises a main body 42a fixedly housed in the harness guide 33 and a rotational member 42b extending therefrom. The assembly 40 further comprises a 2-bar mechanical linkage 44. The linkage comprises a first bar link 44a connected at one end to the rotational member 42b. A second bar link 44b is pivotably connected to the opposing end of the first link 44a, and is connected at its other end to a clipping point 46 on the sleeve 25 of the wiring harness 15.

The clipping point 46 is fixed to the outboard wing section 14 (not shown in Figures 4A-4B). Thus, as the wing moves from the flight configuration (Figure 4A) to the ground configuration (Figure 4B), the clipping point 46 rotates relative to the harness guide 33. This, in turn, results in a corresponding rotation of the 2-bar linkage 44, and hence a rotation of the rotary member 42b of the potentiometer 42.

The output of the potentiometer 42 is therefore directly linked to the position of the outboard wing section 14 relative to the fixed wing 12. In the first embodiment, the harness guide 33 is offset from the axis of rotation of the outboard wing section 14. The two bar link accommodates the radial movement of the clipping point 46, resulting from this offset between the axes of rotation of the outboard wing section and the rotatable member 43b. The first bar link 44a effectively accommodates the inboard-outboard movement resulting from the offset of the hinge/harness guide, and the second bar link 44b effectively accommodates the vertical movement resulting from the offset of the hinge/harness guide. The 2-bar linkage 44 can be visualised as forming parallelogram with a corresponding notional vertex 45 on the wiring harness. This facilitates a well-defined relationship between and the rotation of the first linkage 44a, the rotation of the rotatable member 42a of the potentiometer 42, and the position of the outboard wing section 14.

A processing module 48 is located in the avionics system of the aircraft (see Figure 2). The processing module is configured to receive the output signal of the potentiometer 42 and to determine from that output the corresponding position of the outboard wing section 14. This information is then used in other aspects of the aircraft (for example when instructing a latching and locking unit (LLU) to deploy/retract locking and patching pins to hold the outboard wing section 14 in position).

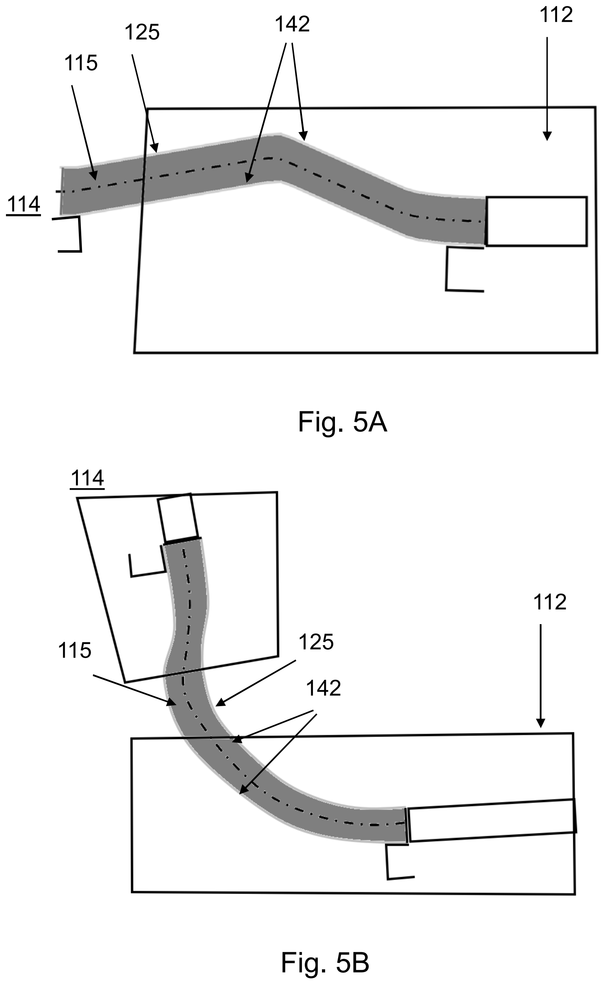

A second embodiment of the invention is illustrated in Figures 5A and 5B. In this embodiment the wiring harness 115 and sleeve 125 extend directly from the fixed wing 112 to the outboard wing 114 without the use of the harness guide. In this example, the sleeve 125 comprises a pair of deformation sensors 142 that are integrally moulded into the sleeve material (the sensors 142 are illustrated in Figures 5A and 5B by the same lighter tone line that defines the sleeve 125). Each deformation sensor 142 runs the length of the sleeve 125. In this embodiment the deformations sensors are spaced apart either side of the neutral axis of the wiring harness 115 (the neutral axis being shown in dot-dashed line in Figures 5A and 5B). Such an arrangement provides dual channel redundancy in the event one of the sensors 142 fails.

The deformation sensors 142 are in the form of piezo electric spines and are arranged to output a signal dependent on the deformation of that spine.

One end of the wiring harness 115 is coupled to the outboard wing section 114. Thus, as the wing moves between the flight configuration (Figure 5A) to the ground configuration (Figure 5B), the wiring harness 115 and sleeve 125 deform in dependence on the position of the outboard wing section 114 relative to the fixed wing 112. A processing module (not shown) is configured to receive the output signal of the deformation sensors 142 and is configurated to determine, from that output, the corresponding position of the outboard wing section 14. This information is then used in other aspects of the aircraft (for example when instructing a latching and locking unit (LLU) to deploy/retract locking and patching pins to hold the outboard wing section 114 in position).

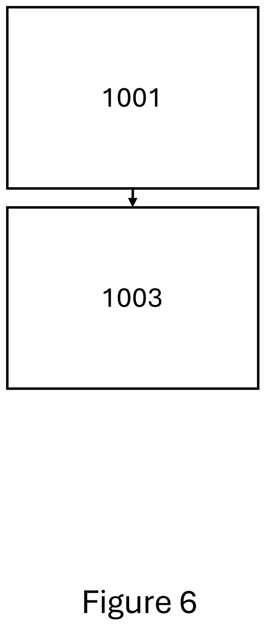

Figure 6 illustrates the steps of a method in a further embodiment of the invention. In the method comprises a first step 1001 of measuring a change in the position and/or shape of a wiring harness (for example using the position sensing assemblies of the first or second embodiments). The method then comprises the subsequent step 1003 of calculating the position of the outboard wing section in dependence on said measurement.

Whilst the present invention has been described and illustrated with reference to particular embodiments, it will be appreciated by those of ordinary skill in the art that the invention lends itself to many different variations not specifically illustrated herein. For example, other forms of deformation sensor may be suitable in the second embodiment of the invention, such as a linear variable resistor or a fibre optic spine comprising a Fibre Bragg Grating (FBG)). In some embodiments of the invention the wing may comprise a wiring harness and a harness guide, with a position sensing assembly comprising deformation sensors associated with the wing harness.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

The term 'or' shall be interpreted as 'and/or' unless the context requires otherwise.

## Claims

1. An aircraft wing, comprising:
a fixed wing; and
an outboard wing section outboard of the fixed wing, the outboard wing section
being moveably mounted at a joint at the end of the fixed wing,
wherein the aircraft wing is configurable between:
(i) a flight configuration for use during flight and
(ii) a ground configuration for use during ground-based operations, in which ground configuration the outboard wing section is moved away from the flight configuration, such that the span of the aircraft wing is reduced,
wherein the aircraft wing further comprises a position sensing assembly for generating an output useable to determine the position of the outboard wing section relative to the fixed wing,
wherein a wiring harness extends between the fixed wing and the outboard wing section, the wiring harness comprising a plurality of conductors and being arranged to transmit electrical power and/or data to the outboard wing section,
and wherein the position sensing assembly is associated with the wiring harness.

2. An aircraft wing according to claim 1, further comprising a harness guide to guide the wiring harness between the fixed wing and the outboard wing section,
wherein during movement of the wing from the flight to the ground configuration, the wiring harness is at least partially unwound from the harness guide.

3. An aircraft wing according to claim 2, wherein the harness guide comprises a helical channel in which the wiring harness is received, and wherein during movement of the wing from the flight to the ground configuration, the wiring harness is partially unwound from the helical channel.

4. An aircraft wing according to any of claims 2 or 3, wherein the position sensing assembly comprises a sensor arranged to generate the output in dependence on the relative rotation between the harness guide and a location on the wiring harness.

5. An aircraft wing according to claim 4, wherein the location on the wiring harness is an attachment point arranged to hold the wiring harness in position, at the attachment point, relative to the outboard wing section.

6. An aircraft wing according to claim 4 or claim 5, wherein the sensor is a potentiometer comprising a rotatable electrical contact, the potentiometer being fixed relative to the harness guide and the rotatable contact being arranged to rotate in dependence on the movement of the location on the wiring harness.

7. An aircraft wing according to any of claims 1 to 3, wherein the position sensing assembly comprises a deformation sensor, the deformation sensor being configured to generate the output in dependence on the deformation of the wiring harness during movement of the wing between the flight and the ground configuration.

8. An aircraft wing according to claim 7, wherein a length of the wiring harness is encased in a length of protective sleeve, and wherein the deformation sensor is integrated into the protective sleeve.

9. An aircraft wing according to any preceding claim, further comprising a processor module configured to determine the position of the outboard wing section, in dependence on the output.

10. An aircraft wing according to any preceding claim, wherein the joint comprises a hinge assembly, the hinge assembly comprising:
a fore set of interleaving lugs and an aft set of interleaving lugs; and
a fore hinge pin and an aft hinge pin, extending through the fore and aft sets of interleaving lugs respectively, thereby forming a hinge.

11. An aircraft according to any preceding claim, further comprising an actuator assembly configured to rotate the outboard wing section to move the wing between the flight configuration and the ground configuration.

12. An aircraft wing, comprising:
a fixed wing; and
an outboard wing section outboard of the fixed wing, the outboard wing section
being rotatable, relative to the fixed wing, about a hinge axis,
wherein the aircraft wing is configurable between:
(i) a flight configuration for use during flight and
(ii) a ground configuration for use during ground-based operations, in which ground configuration the outboard wing section is rotated about the hinge axis away from the flight configuration, such that the span of the aircraft wing is reduced,
wherein the aircraft wing further comprises a position sensing assembly for generating an output signal from which the position of the outboard wing section relative to the fixed wing may be determined,
wherein the position sensing assembly is associated with a wiring harness extending between the fixed wing and the outboard wing section, and wherein the position sensing assembly is configured to generate the output signal based on: (a) the relative movement between a location on the wiring harness and a location on the fixed wing, during movement of the wing between the flight and the ground configuration, or (b) the deformation of the wiring harness during movement of the wing between the flight and the ground configuration.

13. A wiring harness and position sensing assembly for use as the wiring harness and position sensing assembly according to any preceding claim.

14. An aircraft comprising the wing assembly according to any of claim 1 to 12.

15. A method of determining the position of an outboard wing section, relative to a fixed wing section, the method comprising the step of: measuring a change in the position and/or shape of a wiring harness, the wiring harness extending from the fixed wing to the outboard wing section.
